# EUROPEAN PATENT SPECIFICATION

(11) **EP 3 887 930 B1**
(45) Date of publication and mention of the grant of the patent: **04.12.2024**
(21) Application number: 19718987.1
(22) Date of filing: 05.04.2019
(51) Int. Cl.: G06F 3/0481, G06F 3/0482

(54) **METHODS, SYSTEMS, AND MEDIA FOR NAVIGATING USER INTERFACES**
VERFAHREN, SYSTEME UND MEDIEN ZUR NAVIGATION VON BENUTZEROBERFLÄCHEN
PROCÉDÉS, SYSTÈMES ET SUPPORTS DE NAVIGATION D'INTERFACES UTILISATEUR

(43) Date of publication of application: 06.10.2021
(73) Proprietor: Google LLC, Mountain View, CA 94043 (US)
(72) Inventor: KAEMMERER, Dan, Mountain View, CA 94043 (US); HALPERN, Erica, Mountain View, CA 94043 (US); BILLINGSLEY, Blaine, Mountain View, CA 94043 (US)
(74) Representative: Marks & Clerk GST
(86) International application number: PCT/US2019/026012
(87) International publication number: WO 2020/204941

(56) References cited:
- US-A1- 2006 262 218
- US-A1- 2006 268 100
- US-A1- 2015 309 670
- US-A1- 2018 081 530

## Description

### Technical Field

The disclosed subject matter relates to methods, systems, and media for navigating user interfaces.

### Background

Users frequently watch media content items that are available through online services. In some cases, users can browse through available media content items using a user interface that presents available content items. While browsing on a user device that has a touchscreen, such as a tablet computer or a wearable computer, a user may be able to drag portions of the user interface to, for example, scroll through available items, or click on particular user interface controls to access different menu interfaces. However, it may be more difficult for a user to browse through available items when using a user device that uses a different type of input device, such as a television with a remote control. For example, a remote control with a directional input pad may require many inputs to scroll through different options of a user interface.

US2015/0309670 relates to the navigation of a user interface which includes a plurality of media identifier elements.

US2018/0081530 relates to the provision of media guidance with contextual controls.

US2006/0262218 relates to the selection of items from a list, where each item is displayed as an icon within a series of icons.

Accordingly, it is desirable to provide new methods, systems, and media for navigating user interfaces.

### Summary

Methods, systems, and media for navigating user interfaces are provided.

In accordance with some embodiments of the disclosed subject matter, a method for navigating user interfaces is provided, the method comprising causing, on a user interface presented on a display device, a plurality of tile interfaces to be presented, wherein a first tile interface of the plurality of tile interfaces is presented in a visual manner that indicates that the first tile interface is currently highlighted, and wherein each tile interface of the plurality of tile interfaces corresponds to a media content item that is available for presentation on the display device, determining that a predetermined duration of time has elapsed since the first tile interface was presented in the visual manner that indicates that the first tile interface is currently highlighted, in response to determining that the predetermined duration of time has elapsed since the first tile interface was presented in the visual manner that indicates that the first tile interface is currently highlighted, causing a menu icon that corresponds to a menu interface for accessing options related to a media content item corresponding to the highlighted first tile interface to be presented in connection with the highlighted first tile interface, causing a directional input indicator to be presented in connection with the menu icon and which indicates a given directional input that, when entered, will cause the corresponding menu icon to become selectable, receiving, via an input device associated with the display device, a first directional input from a group of possible directional inputs, determining whether the first directional input is said given directional input that causes the menu icon to become selectable, in response to determining that the first directional input is the given directional input, activating the menu icon that causes the menu icon to become selectable, determining whether a subsequent directional input was received within a predetermined period of time of causing the menu item to become selectable, in response to activating the menu icon and determining that the subsequent directional input was not received within the predetermined period of time, causing the menu item to be selected, in response to causing the menu icon to be selected, causing the menu interface for accessing the options related to the media content item corresponding to the highlighted first tile interface to be presented, receiving, via the input device, the first directional input for a second time, and in response to receiving the first directional input for the second time, causing a second tile interface of the plurality of tile interfaces to be presented, wherein the second tile interface is located in a position relative to the first tile interface that corresponds to the first directional input.

In some embodiments, the method further comprises: receiving, via the input device, a second directional input, wherein the predetermined directional input corresponds to a selection of an up command on the input device; and in response to determining that the second directional input is not the predetermined directional input from the group of possible directional inputs that causes the menu icon to become selectable, causing a third tile interface of the plurality of tile interfaces to be highlighted, wherein the third tile interface is located in a position relative to the first tile interface that corresponds to the second directional input.

In some embodiments, the method further comprises determining that a predetermined duration of time has elapsed since the first tile interface was presented in the visual manner that indicates that the first tile interface is currently highlighted, wherein the menu icon that corresponds to the menu interface is presented in response to determining that the predetermined duration of time has elapsed.

In some embodiments, the method further comprises determining that a press and hold gesture has been received from the input device while the first tile interface was presented in the visual manner that indicates that the first tile interface is currently highlighted, wherein the menu icon that corresponds to the menu interface is presented in response to determining that the press and hold gesture has been received.

In some embodiments, the options related to the media content item include an option to indicate that the media content item is not of interest to a user of the display device.

In some embodiments, the method further comprises, in response to determining that the option to indicate that the media content item is not of interest to the user of the display device, updating the plurality of tile interfaces presented on the user interface based on the indication that the media content item is not of interest to the user of the display device.

In some embodiments, the options related to the media content item include an option to add the media content item to a group of media content items associated with a user account of a user of the display device.

In some embodiments, the method further comprises, in response to receiving a selection of the option to add the media content item to the group of media content items, causing a playlist interface to be presented, wherein the playlist interface prompts a selection of a first group of media content items from a plurality of groups of media content items to add the media content item.

In some embodiments, the options related to the media content item include an option to add the media content item to a queue of media content items for playback at a later time.

In some embodiments, the options related to the media content item include an option to indicate that the media content item contains inappropriate content.

In accordance with some embodiments of the disclosed subject matter, a system for navigating user interfaces, the system comprising a hardware processor that is configured to cause, on a user interface presented on a display device, a plurality of tile interfaces to be presented, wherein a first tile interface of the plurality of tile interfaces is presented in a visual manner that indicates that the first tile interface is currently highlighted, and wherein each tile interface of the plurality of tile interfaces corresponds to a media content item that is available for presentation on the display device, determine that a predetermined duration of time has elapsed since the first tile interface was presented in the visual manner that indicates that the first tile interface is currently highlighted, in response to determining that the predetermined duration of time has elapsed since the first tile interface was presented in the visual manner that indicates that the first tile interface is currently highlighted, cause a menu icon that corresponds to a menu interface for accessing options related to a media content item corresponding to the highlighted first tile interface to be presented in connection with the highlighted first tile interface, cause a directional input indicator to be presented in connection with the menu icon and which indicates a given directional input that, when entered, will cause the corresponding menu icon to become selectable, receive, via an input device associated with the display device, a first directional input from a group of possible directional inputs, determine whether the first directional input is said given directional input that causes the menu icon to become selectable, in response to determining that the first directional input is the given directional input, activate the menu icon that causes the menu icon to become selectable, determine whether a subsequent directional input was received within a predetermined period of time of causing the menu item to become selectable, in response to activating the menu icon and determining that the subsequent directional input was not received within the predetermined period of time, cause the menu item to be selected, in response to causing the menu icon to be selected, cause the menu interface for accessing the options related to the media content item corresponding to the highlighted first tile interface to be presented, receive, via the input device, the first directional input for a second time, and in response to receiving the first directional input for the second time, cause a second tile interface of the plurality of tile interfaces to be presented, wherein the second tile interface is located in a position relative to the first tile interface that corresponds to the first directional input.

### Brief Description of the Drawings

Various objects, features, and advantages of the disclosed subject matter can be more fully appreciated with reference to the following detailed description of the disclosed subject matter when considered in connection with the following drawings, in which like reference numerals identify like elements.
FIG. 1 shows an illustrative example of a process for navigating user interfaces in accordance with some embodiments of the disclosed subject matter.
FIGS. 2A and 2B show illustrative examples of user interfaces for presenting available media content items in accordance with some embodiments of the disclosed subject matter.
FIGS. 3A - 3D show illustrative examples of user interfaces for navigating to a menu options interface in accordance with some embodiments of the disclosed subject matter.
FIG. 4 shows an illustrative example of a user interface that can be presented to indicate a media content item has been selected as not of interest to a user in accordance with some embodiments of the disclosed subject matter.
FIGS. 5A and 5B show illustrative examples of user interfaces for adding a media content item to a group of media content items to be viewed later in accordance with some embodiments of the disclosed subject matter.
FIGS. 6A - 6C show illustrative examples of user interfaces for adding a media content item to a playlist of media content items in accordance with some embodiments of the disclosed subject matter.
FIGS. 7A - 7C show illustrative examples of user interfaces for reporting a media content item as including objectionable content in accordance with some embodiments of the disclosed subject matter.
FIG. 8 shows a schematic diagram of an illustrative system suitable for implementation of mechanisms described herein for navigating user interfaces in accordance with some embodiments of the disclosed subject matter.
FIG. 9 shows a detailed example of hardware that can be used in a server and/or a user device of FIG. 8 in accordance with some embodiments of the disclosed subject matter.

### Detailed Description

In accordance with various embodiments, mechanisms (which can include methods, systems, and media) for navigating user interfaces are provided. The mechanisms disclosed herein can facilitate navigating user interfaces by means of an input device that is configured to provide a directional input to the user device. For example, such an input device may include a directional input pad, cursor keys or other similar types of directional input. Navigating conventional user interfaces with such input devices may require many repeated inputs to scroll through different options that are available within the user interface. The mechanisms disclosed herein can reduce the number of inputs required to navigate a user interface. This in turn can reduce the time taken to navigate the user interface and can reduce the amount of computation required to process a greater number of inputs.

In some embodiments, the mechanisms described herein can be used to navigate through a user interface. In particular, the mechanisms described herein can receive directional inputs and can navigate through the user interface based on the received directional inputs. In some embodiments, the mechanisms can cause a menu icon representing a menu options interface to become active in response to receiving a particular directional input. In some embodiments, in response to receiving the same directional input a second time, the mechanisms can return to navigating through the user interface in a manner that corresponds to the received directional input. In some embodiments, the particular directional input that causes a menu icon to become active can be any suitable directional input from a group of possible directional inputs. For example, in some embodiments, the particular directional input can be an "up" command from a group of possible directional inputs, such as an "up" command, a "down" command, a "left" command, and a "right" command. In some such embodiments, in response to receiving any directional inputs other than the particular directional input, the mechanisms can navigate through the user interface based on the received directional input.

In the present disclosure, the terms "tile" and "tile interface" are used interchangeably to refer to an interactive element in a user interface. A tile may have some or all of the following functionality: a tile can be highlighted; a tile can have an associated menu icon and/or menu interface, to allow options related to the tile to be accessed; and a tile can be displayed adjacent one or more other tiles with similar functionality, generally in a horizontal and/or vertical direction. Highlighting may describe a state in which the tile is the focus of an input device (in other words, an input from the input device will be directed to the tile). The tile may be highlighted in response to a user input, or in any other suitable manner. In the highlighted state, the visual appearance of the tile may change to indicate that the tile is the focus of the input device.

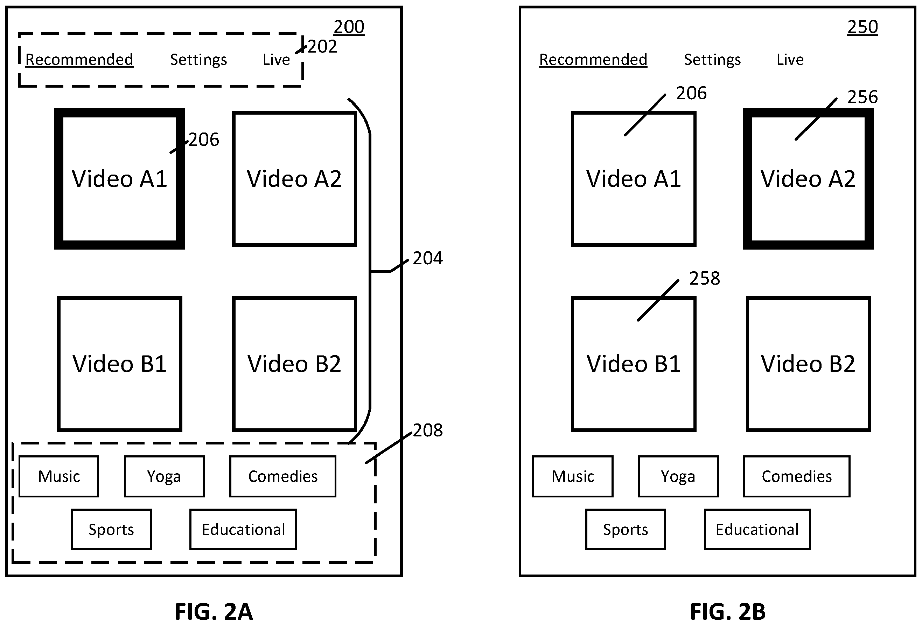

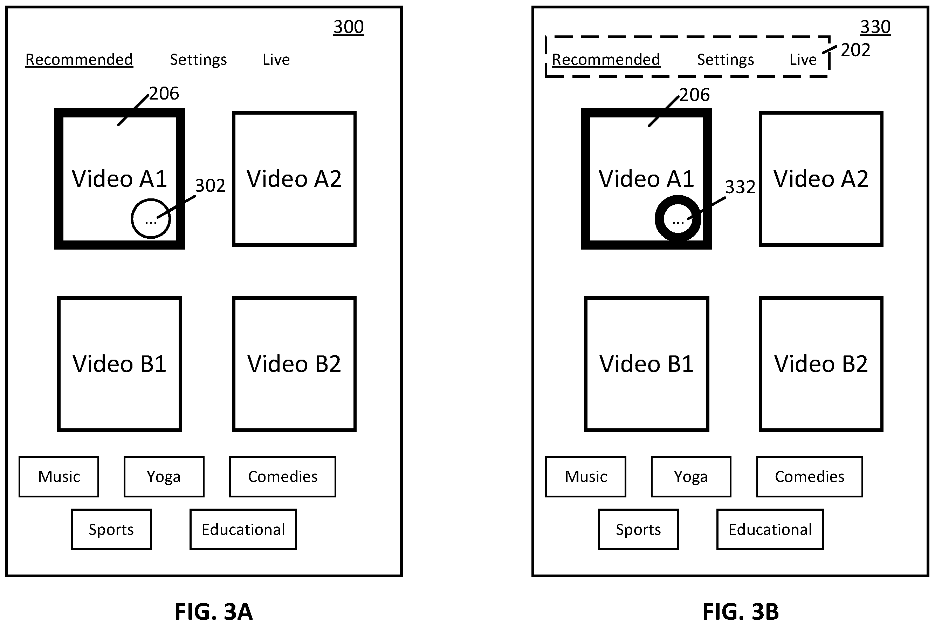

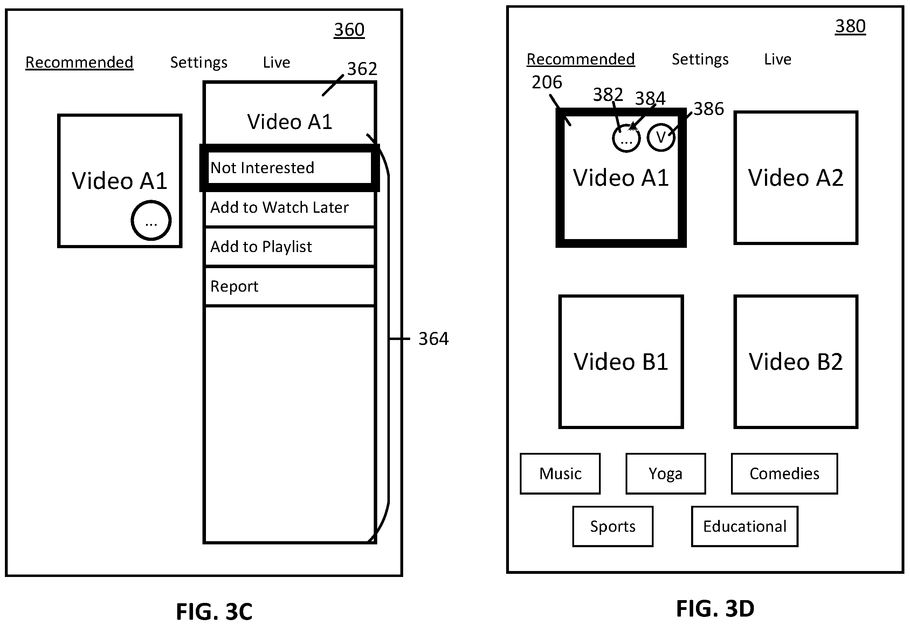

An illustrative example of using the techniques described herein to navigate through a user interface that presents available media content items is provided below. In some embodiments, the mechanisms can cause a user interface that indicates available media content items (e.g., media content items available for download or streaming from a media content sharing service, and/or any other suitable media content items) to be presented. In some such embodiments, a first tile that represents a first available media content item can be highlighted, as shown in and described below in connection with FIG. 2A. In some embodiments, in response to determining that the first tile is currently highlighted (or has been selected for more than a predetermined duration of time), the mechanisms can cause a menu icon that represents a menu options interface corresponding to a menu of options relevant to the first media content item to be presented in connection with the first tile, as shown in and described below in connection with FIG. 3A. Note that, in some embodiments, the menu icon can be inactive or not selectable. In some embodiments, in response to receiving a particular directional input (e.g., an "up" command, a command in an opposing direction from the current input, etc.), the mechanisms can cause the menu icon to be highlighted, thereby causing the menu icon to become active and/or selectable. In some embodiments, in response to determining that the menu icon has been selected, the mechanisms can cause a menu of options relevant to the first media content item to be presented, as shown in and described below in connection with FIG. 3C. For example, in some embodiments, the menu of options can include an option to remove the first media content item from a group of recommended media content items, an option to add the first media content item to a playlist of media content items, an option to indicate that the first media content item may contain objectionable content, an option to request that the content of the first media content item be reviewed (e.g., by a human reviewer), and/or any other suitable options. In some embodiments, in response to receiving the particular directional input for a second time, the mechanisms can return to navigating through the user interface in a direction corresponding to the particular directional input (e.g., by highlighting a second tile located in a position corresponding to the received directional input).

In some embodiments, in response to receiving a directional input other than the particular directional input (e.g., a "down" command, a "left" command, or a "right" command, continuing with the example above), the mechanisms can allow a different portion of the user interface to be highlighted corresponding to the received directional input. For example, in some embodiments, in response to receiving a "down" directional input from an associated input device, the mechanisms can cause a third tile located below the first tile to be highlighted or otherwise indicated as being selectable.

That is, in some embodiments, the mechanisms described herein can cause a menu icon that represents a menu options interface with options relevant to one portion of a user interface (e.g., one tile that represents a media content item) to appear in response to determining that the one portion of the user interface has been highlighted. The mechanisms can then cause the menu icon to become active and/or selectable in response to receiving a particular directional input from a group of directional inputs. By presenting the menu icon in response to determining that a corresponding portion of the user interface has been highlighted and by causing the menu icon to become selectable in response to receiving the particular directional input, the mechanisms can allow a user interface with many selectable inputs to be dynamically updated such that menu icons or menu options interfaces do not clutter the user interface. Furthermore, the mechanisms can allow menu interfaces to be easily reached using an input device with a directional input pad, such as a remote control.

Note that, although the examples described herein generally relate to media content items, the techniques described herein can be used to navigate through a user interface that presents any suitable type of content, such as posts provided by a social networking service, documents (e.g., documents available on a file sharing service, and/or any other suitable type of documents), and/or any other suitable type of content.

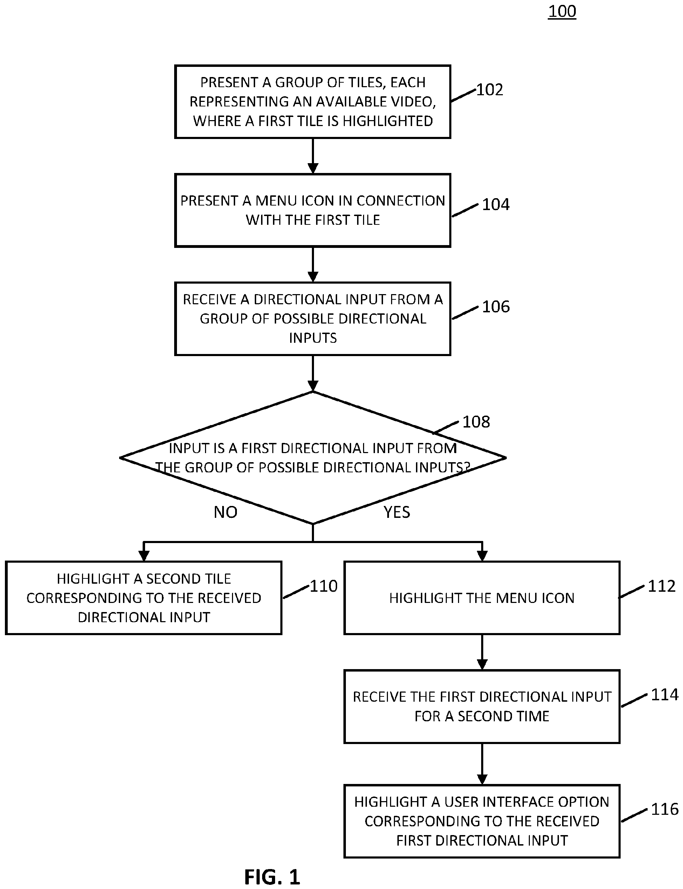

Turning to FIG. 1, an illustrative example 100 of a process for navigating user interfaces is shown in accordance with some embodiments of the disclosed subject matter. In some embodiments, process 100 can be implemented on any suitable device, such as a user device that can present a user interface for browsing media content items available from a media content sharing service, selecting a particular media content item, and presenting a selected media content item. For example, in some embodiments, process 100 can be implemented on a display device, such as a television device and/or any other suitable display device. In another example, in some embodiments, process 100 can be implemented on a computing device, such as a mobile computing device, where a selected media content item that is available from a media content sharing service can be presented on a display device associated with the computing device (e.g., by streaming, by screen mirroring, by transmitting an instruction to retrieve the media content sharing service, etc.).

Process 100 can begin at 102 by presenting, in a user interface, a group of tiles that each represent an available media content item, where a first tile in the group of tiles is highlighted. In some embodiments, the user interface can be associated with a media content sharing service that hosts and/or provides media content items to user devices. For example, in some embodiments, the user interface can present indications of video content items that are available for presentation via the media content sharing service. It should be noted, however, that any suitable content items can be provided.

Turning to FIG. 2A, an example 200 of a user interface that includes a group of tiles is shown in accordance with some embodiments of the disclosed subject matter. As illustrated, user interface 200 can include options 202, a group of tiles 204, and genres 208.

In some embodiments, options 202 can include any suitable selectable inputs that, when selected, can present a different user interface. For example, as illustrated in FIG. 2A, options 202 can include a selectable input corresponding to settings associated with a media content sharing service. As a more particular example, in some embodiments, selection of a settings input in options 202 can cause a user interface that allows a user of the user device to change any suitable settings associated with a user account corresponding to the user device with the media content sharing service to be modified. As another example, as illustrated, options 202 can include a selectable input to present indications of currently available live-streaming content.

In some embodiments, group of tiles 204 can include any suitable tiles that each correspond to an available media content item. For example, as illustrated in FIG. 2A, group of tiles 204 can include a tile 206 that corresponds to a particular video content item, "Video Al." In some embodiments, a tile included in group of tiles 204 can include any suitable content, such as a name of a corresponding media content item, a thumbnail image associated with the media content item, a name of a creator of the media content item, a number of views of the media content item, a duration of the media content item, and/or any other suitable information.

Note that, as shown in FIG. 2A, tile 206 is highlighted within group of tiles 204. In some embodiments, a tile in group of tiles 204 can be highlighted in any suitable visual manner. For example, in some embodiments, a highlighted tile can be presented in a larger size relative to other tiles in group of tiles 204. As another example, in some embodiments, a highlighted tile can be presented with a border or a highlight region placed around the tile. As yet another example, in some embodiments, a highlighted tile can be presented such that the tile appears to be in a foreground of the user interface relative to other tiles in group of tiles 204.

In some embodiments, genres 208 can include a group of selectable inputs, each corresponding to a topic or category. For example, as illustrated in FIG. 2A, genres 208 can include selectable inputs for topics or categories corresponding to a "music" media category, a "yoga" media category, a "comedies" media category, etc. In some embodiments, selection of a topic or category within genres 208 can cause tiles in group of tiles 204 to be replaced with tiles corresponding to media content items corresponding to the selected topic or category. For example, in an instance where a "sports" media category is selected within genres 208, tiles within group of tiles 204 can be replaced by tiles representing media content items each associated with "sports" as a topic (e.g., videos of games or matches, interviews with particular athletes, etc.).

Note that, in some embodiments, a user of the user device can navigate through user interface 200 in any suitable manner. For example, in instances where the user device includes a touchscreen, the user can select any suitable selectable input included in user interface 200, drag user interface 200 to scroll through tiles included in group of tiles 204, and/or navigate in any other suitable manner. As another example, in instances where the user device is associated with a remote control or other input device that provides directional inputs, the user can navigate through user interface 200 using directional inputs. As a more particular example, in an instance where tile 206 is highlighted as shown in FIG. 2A, a received directional input of "right" can cause a tile 256 as shown in user interface 250 of FIG. 2B to be highlighted. As another more particular example, a received directional input of "down" can cause tile 258 of user interface 250 of FIG. 2B to be highlighted.

Referring back to FIG. 1, at 104, process 100 can present a menu icon in connection with the first tile. In some embodiments, the menu icon can, when selected, cause a menu options interface that presents options relevant to a media content item corresponding to the first tile to be presented. For example, in some embodiments, the menu options interface can include options such as adding the media content item to a group of media content items to be watched later, adding the media content item to a playlist, indicating that the media content item is not of interest to a user of the user device, reporting the media content item as containing or potentially containing objectionable content, requesting that the media content item be reviewed for containing potentially containing objectionable content, and/or any other suitable options, as described below in connection with FIGS. 3C, 4, 5A, 5B, 6A-6C, and 7A-7C.

Turning to FIG. 3A, an example 300 of a user interface that includes a menu icon in connection with a highlighted tile is shown in accordance with some embodiments of the disclosed subject matter. As illustrated in FIG. 3A, user interface 300 shows menu icon 302 presented in connection with tile 206. In this regard, the menu icon 302 being presented "in connection with" the tile 206 can include presenting the menu icon 302 in any suitable manner that associates the menu icon 302 with the tile 206. For example, the menu icon 302 may be displayed within the tile 206, adjacent and abutting the tile 206, or adjacent but not abutting the tile 206.

Referring back to FIG. 1, in some embodiments, process 100 can cause the menu icon to be presented at any suitable time. For example, in some embodiments, process 100 can cause the menu icon to be presented in response to determining that tile 206 has been highlighted. As another example, in some embodiments, process 100 can cause the menu icon to be presented in response to determining that tile 206 has been highlighted for more than a predetermined duration of time (e.g., more than one second, more than two seconds, and/or any other suitable duration of time), and/or at any other suitable time. As yet another example, in some embodiments, process 100 can cause the menu icon to be presented in response to receiving a particular gesture, such as a press and hold gesture or a press and hold command for a given navigational direction.

In some embodiments, process 100 can determine whether the menu icon associated with the highlighted tile is available for presentation. For example, in some embodiments, process 100 can determine that additional options are available (e.g., adding the media content item to a playlist, indicating that the media content item is not of interest to a user of the user device, reporting the media content item as containing or potentially containing objectionable content, requesting that the media content item be reviewed for containing potentially containing objectionable content, etc.) and, in response, can present a suitable menu icon associated with menu options. In another example, process 100 can determine that none of the menu options are relevant and/or available for the highlighted tile (e.g., tile 206) and, in response, can inhibit a menu icon, such as menu icon 302, from being presented.

In some embodiments, process 100 can determine which menu icon from multiple menu icons to present along with the highlighted tile. For example, in some embodiments, different menu icons can be presented along with the highlighted tile. In a more particular example, process 100 can determine that the additional options relate to adding the media content item to a playlist or adding the media content item to a queue for playback at a later time and, in response, can present a menu icon that corresponds with playback or queueing options.

Referring back to FIG. 1, at 106, process 100 can receive a directional input from a group of possible directional inputs. In some embodiments, process 100 can receive the directional input from any suitable input device. For example, in some embodiments, process 100 can receive the directional input from a remote control. As another example, in some embodiments, process 100 can receive the directional input from a game console controller that includes a directional pad. In some embodiments, the group of possible directional inputs can include any suitable directions, such as up, down, left, right, and/or any other suitable directions.

At 108, process 100 can determine whether the received directional input is a first directional input from the group of possible directional inputs. In some embodiments, the first directional input can be a directional input that causes the menu icon to become active or selectable on the highlighted first tile.

In some embodiments, the first directional input can be any input of the group of possible directional inputs. For example, in some embodiments, the first directional input can be an "up" command. As another example, in some embodiments, the first directional input can be a "down" command. In some embodiments, the first directional input can be specified in any suitable manner. For example, in some embodiments, the first directional input can be specified as user-configuration settings corresponding to a user account of a media content sharing service. As a more particular example, in some embodiments, a user of the user device can specify that an "up" directional input is to cause the menu icon to become highlighted, indicating that the menu icon is active or selectable. As another more particular example, in some embodiments, a user of the user device can specify that an "up" directional input that is received when the menu icon is presented in relation to a media tile can cause the menu icon to become highlighted and can cause the menu icon to be selected, thereby presenting the menu options associated with the menu icon.

If, at 108, process 100 determines that the received directional input is not the first directional input ("no" at 108), process 100 can continue to 110 and can highlight a second tile corresponding to the received directional input. For example, referring back to FIGS. 2A and 2B, in an instance where tile 206 of FIG. 2A is the first highlighted tile, and where the received directional input is a "right" command, process 100 can cause tile 256 to be highlighted, as shown in FIG. 2B. As another example, in an instance where tile 206 of FIG. 2A is the first highlighted tile, and where the received directional input is a "down" command, process 100 can cause a tile corresponding to "Video B1" as shown in FIG. 2A to be highlighted. Note that, in an instance where tile 206 is of FIG. 2A is the first highlighted tile and where the received directional input is a "down" command, process 100 can cause any suitable action to occur. For example, in some embodiments, process 100 can cause a shelf on which "Video A1" and "Video A2" are located to scroll such that another tile appears to the left of "Video A1." Note that, in some embodiments, process 100 can take no action.

If, at 108, process 100 determines that the received directional input is the first directional input ("yes" at 108), process 100 can continue to 112 and can highlight the menu icon. For example, referring back to FIG. 3B, process 100 can cause menu icon 332 to be highlighted. In another example, process 100 can cause menu icon 332 to be highlighted for a particular amount of time (e.g., 1 second) and, after a predetermined amount of time in which a subsequent directional input is not received (e.g., to indicate that the user wishes to navigate away from menu icon 332), process 100 can then cause menu icon 332 to be selected to present the menu options corresponding to menu icon 332.

Process 100 indicates that menu icon 332 is by highlighting icon 332. Referring to FIG. 3A, menu icon 302 is not highlighted, and is not selectable when not highlighted. Referring to FIG. 3B, menu icon 332 is highlighted, and becomes selectable when highlighted. Process 100 causes menu icon 332 to become selectable in response to determining that the received directional input is the first directional input.

Note that, in some embodiments, a menu icon can be presented in any suitable manner. Turning to FIG. 3D, a user interface 380 that shows an alternative presentation of a menu icon is shown in accordance with some embodiments of the disclosed subject matter.

As illustrated in FIG. 3D, user interface 380 can include a menu icon 382 that is presented in connection with tile 206 that represents "Video A1." Note that, as shown in FIG. 3D, in some embodiments, menu icon 382 can be presented in an upper portion of tile 206. Alternatively, in some embodiments, menu icon 382 can be presented in any other suitable position relative to tile 206. For example, in some embodiments, menu icon 382 can be presented above tile 206 (e.g., aligned with the top edge of tile 206), below tile 206, to the right of tile 206, to the left of tile 206, and/or in any other suitable position. As another example, in some embodiments, menu icon 382 can be presented such that it overlays tile 206, as shown in FIGS. 3A-3D. Alternatively, in some embodiments, menu icon 382 can be presented such that it does not overlay tile 206, for example, presented above or below tile 206.

As shown in user interface 380 of FIG. 3D, a menu icon (e.g., menu icon 382, and/or any other suitable menu icon) is presented in connection with a directional input indicator 384 that indicates a directional input that, when entered, will cause the corresponding menu icon to become selectable. For example, as shown in FIG. 3D, directional input indicator 384 can indicate that a directional input of "up" will cause menu icon 382 to become active or selectable.

In some embodiments, process 100 can determine a suitable directional input to present along with a menu icon. For example, in some embodiments, process 100 can determine a least used directional input (e.g., an "up" command). In response to this determination, process 100 can set the least used directional input as the directional input that, when provided, will cause the corresponding menu icon to become active or selectable and can provide the appropriate affordance for presentation along with the menu icon.

In some embodiments, any other suitable selectable inputs that, when selected, cause menus related to a content item represented by a tile associated with the selectable inputs to be presented and/or that cause actions related to the content item to be performed can be presented. For example, as shown in user interface 380 of FIG. 3D, tile 206 can be presented in connection with a dislike input 386. In some embodiments, in response to dislike input 386 being selected, a media content item represented by tile 206 (e.g., "Video A1 ") can be removed from user interface 380. Additionally or alternatively, in some embodiments, any other suitable actions can be performed in response to determining that dislike input 386 has been selected. For example, in some embodiments, recommendations for a user viewing user interface 380 can be updated based on information indicating that the user is not interested in viewing "Video A1." As another example, in some embodiments, a menu that requests a reason the user is not interested in viewing "Video A1" can be presented (e.g., with options such as "I've already seen this," "I don't like music videos," etc.).

Note that, in some embodiments, any other suitable selectable inputs can be presented in connection with tile 206. For example, in some embodiments, a selectable input that, when selected, causes the media content item represented by tile 206 to be added to a "watch later" queue can be presented. As another example, in some embodiments, a selectable input that, when selected, causes the media content item represented by tile 206 to be added to a playlist can be presented.

Referring back to FIG. 3C, in some embodiments, in response to determining that menu icon 332 has been selected (e.g., selected via an input device associated with the user device, such as a remote control), process 100 can cause an options menu interface to be presented. Note that, in some embodiments, the options menu interface can present menu options that are relevant to a media content item corresponding to a tile presented in connection with the selected menu icon. For example, referring to selected menu icon 332, which is presented in connection with a tile corresponding to "Video A1," the menu options interface can present options relevant to "Video A1." Turning to FIG. 3C, an example 360 of a user interface for presenting a menu options interface that can be presented in response to determining that menu icon 332 has been selected is shown in accordance with some embodiments of the disclosed subject matter.

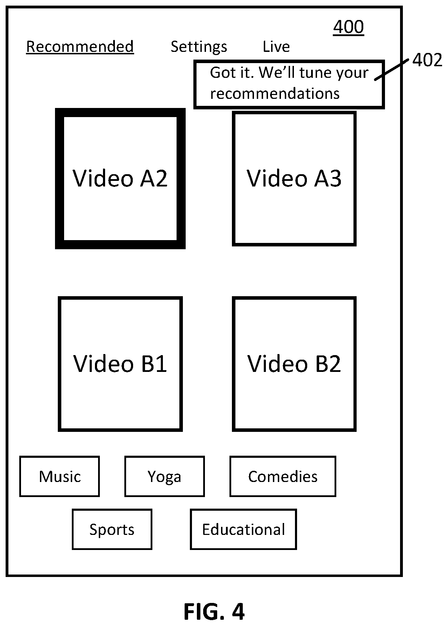

As shown in FIG. 3C, user interface 360 can include menu 362, which can include a group of menu options 364. In some embodiments, group of menu options 364 can include any suitable options, such as an option to indicate that a media content item associated with the selectable input to display the menu is not of interest to a user of the user device, an option to add the media content item to a group of media content items to be watched later, an option to add the media content item to a playlist of media content items, an option to report the media content item as containing objectionable content, an option to request that the content of the media content item be reviewed by an administrator user, and/or any other suitable options. Note that, in some embodiments, a user of the user device can navigate through the options in group of menu options 364 in any suitable manner, for example, using directional inputs received via an input device associated with the user device (e.g., a remote control, and/or any other suitable input device). Additionally, note that, in some embodiments, each option in group of menu options can be selectable. FIGS. 4, 5A, 5B, 6A-6C, and 7A-7C show examples of user interfaces that can be presented in response to different options within group of menu options 364 being selected and are described in more detail below.

Turning to FIG. 4, an illustrative example 400 of a user interface that can be presented in response to receiving a selection of a "not interested" option in a group of menu options corresponding to a media content item is shown in accordance with some embodiments of the disclosed subject matter. As illustrated, in some embodiments, user interface 400 can include a notification 402 that indicates that recommendations for a user of the user device will be updated based on the received indication that the user is not interested in the media content item. Note that, as shown in and described above in connection with FIGS. 2A, 2B, and 3A-3C, the menu options interface is associated with "Video A1." Referring to FIG. 4, in response to receiving an indication via the menu options interface that the user is not interested in "Video A1," user interface 400 can present recommended videos with "Video A1" removed from the recommendations.

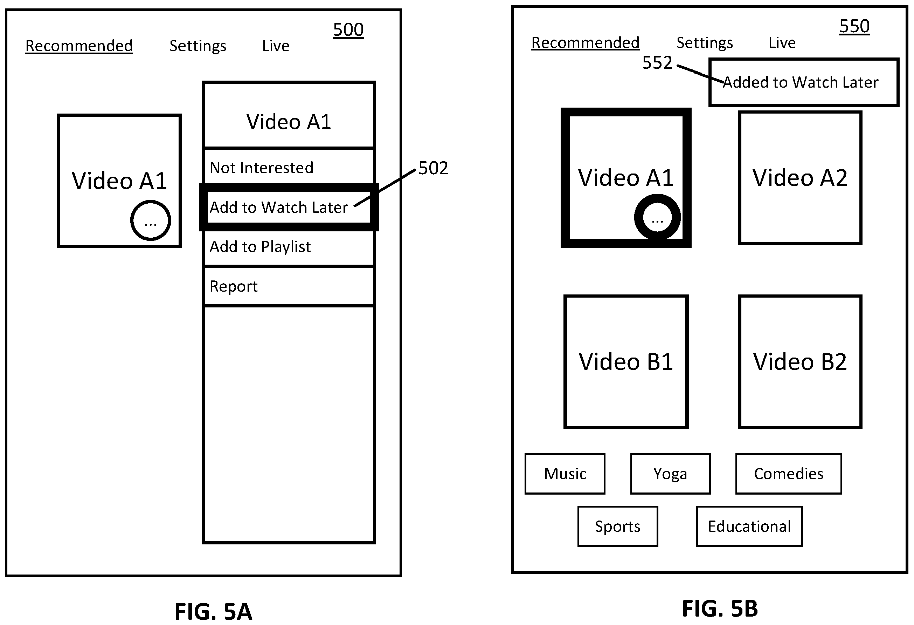

Turning to FIG. 5A, an illustrative example 500 of a user interface that includes a more options menu interface corresponding to a media content item is shown in accordance with some embodiments of the disclosed subject matter. As illustrated, user interface 500 can include an option 502 to add the media content item to a group of media content items saved for a user of the user device to watch at a later time.

Turning to FIG. 5B, an illustrative example 550 of a user interface that can be presented in response to determining that option 502 has been selected is shown in accordance with some embodiments of the disclosed subject matter. As illustrated, user interface 550 can include a notification 552 that can indicate that the media content item has been added to a group of media content items saved for the user to watch at a later time. Note that, in some embodiments, adding a media content item to a group of media content items to be watched later can cause the added media content item to be saved or bookmarked in any suitable manner. For example, in some embodiments, the added media content item can be added to a queue of media content items saved for the user.

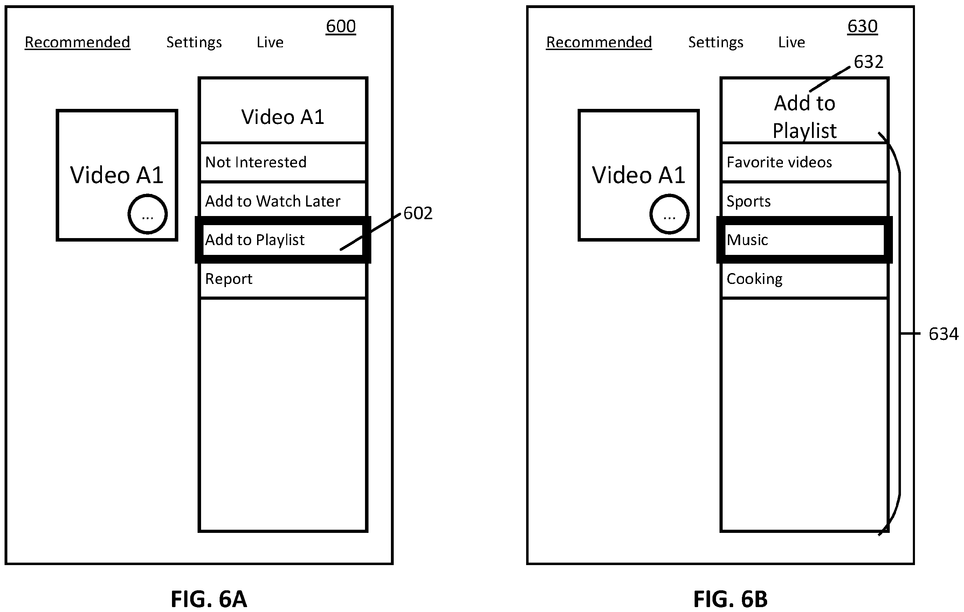

Turning to FIG. 6A, an illustrative example 600 of a user interface that includes a more options menu interface corresponding to a media content item is shown in accordance with some embodiments of the disclosed subject matter. As illustrated, user interface 600 can include an option 602 to add the media content item to a playlist of media content items. In a more particular example, user interface 600 can prompt the user to select a playlist of media content items in which the media content item will be added or can prompt the user to create a new playlist of media content items in which the media content item will be added. In another more particular example, user interface 600 can recommend a playlist of media content items to add the media content item by comparing the metadata of the media content item and the metadata of the media content items within each playlist.

Turning to FIG. 6B, an illustrative example 630 of a user interface that can be presented in response to determining that option 602 has been selected is shown in accordance with some embodiments of the disclosed subject matter.

As illustrated, user interface 630 includes a playlist selection interface 632. In some embodiments, playlist selection interface 632 can include indications of available playlists, such as group of available playlists 634. In some embodiments, playlists included in group of available playlists 634 can include any playlists previously created by a user of the user device. Note that, in some embodiments, a user of the user device may have previously created a playlist included in group of available playlists 634 on a different user device, and the playlist as well as any content items added to the playlist can be saved in association with a user account of the user that can be accessed from multiple user devices. Additionally, note that, in some embodiments, each playlist included in group of available playlists 634 can be a selectable input that, when selected, causes the media content item associated with the menu interface to be added to the selected playlist.

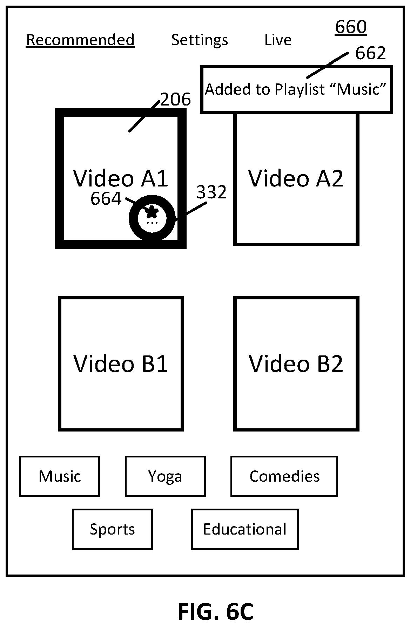

Turning to FIG. 6C, an illustrative example 660 of a user interface that can be presented in response to determining that a playlist from group of playlists 634 as shown in FIG. 6B has been selected is shown in accordance with some embodiments of the disclosed subject matter. As illustrated, user interface 660 can include a notification 662 that indicates that the media content item has been added to the selected playlist. Additionally, as shown in FIG. 6C, user interface 660 can include an icon 664 that can be presented in connection with tile 206 that indicates that the media content item corresponding to tile 206 has been added to the selected playlist. Note that the location of icon 664 in connection with tile 206 is shown merely as an example, and, in some embodiments, icon 664 can be located at any suitable position. In some embodiments, icon 664 can be omitted.

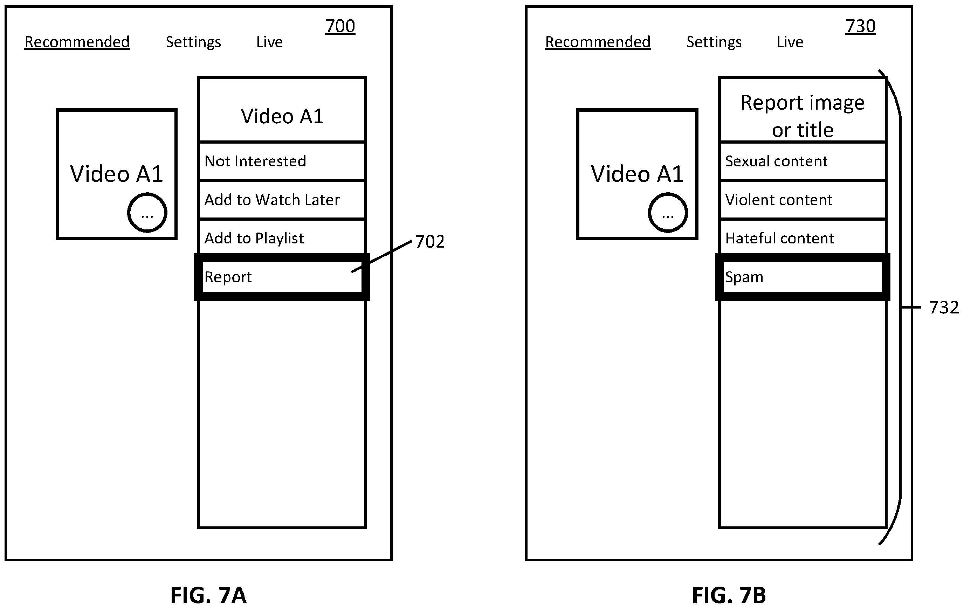

Turning to FIG. 7A, an illustrative example 700 of a user interface that includes a more options menu interface corresponding to a media content item is shown in accordance with some embodiments of the disclosed subject matter. As illustrated, user interface 600 can include an option 702 to report the media content item as including objectionable content.

Turning to FIG. 7B, an illustrative example 730 of a user interface that can be presented in response to determining that option 702 has been selected is shown in accordance with some embodiments of the disclosed subject matter. As illustrated, user interface 730 can include a reporting options interface that include a group of reporting reasons 732. As illustrated, group 732 can include any suitable reasons the media content item is being reported, such as that the media content item includes particular types of objectionable content (e.g., sexual content, violent content, hateful content, spam, and/or any other suitable type of objectionable content). Note that, in some embodiments, each reason included in group 732 can be selectable.

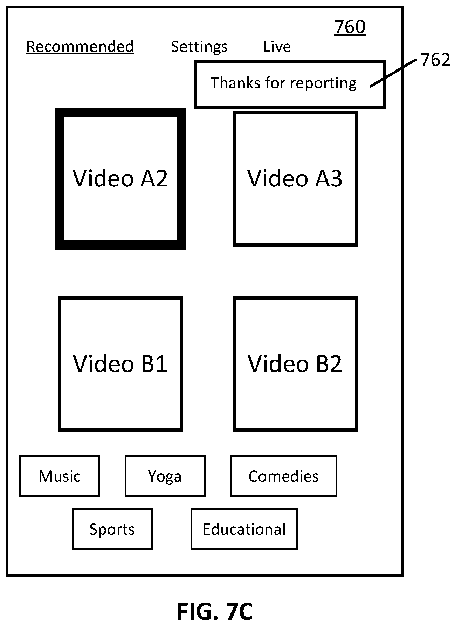

Turning to FIG. 7C, an example 760 of a user interface that can be presented in response to a reason from group of reporting reasons 732 being selected is shown in accordance with some embodiments of the disclosed subject matter. As illustrated, user interface 760 can include a notification 762 that can indicate that the media content item has been reported. Note that, in some embodiments, reporting of a media content item can cause any suitable action to occur. For example, in some embodiments, the media content item can be removed from a group of tiles that indicate available media content items, as shown in FIG. 7C. As another example, in some embodiments, an indication of the media content item can be transmitted to a human evaluator for confirmation that the media content item includes the reported objectionable content. As yet another example, in some embodiments, the media content item can be removed from the media content sharing service. In a further example, in some embodiments, the media content item can be provided with a suitable indicator (e.g., a shaded version of the media content identifier) to indicate that the media content item is currently being reviewed by an evaluator (e.g., a human evaluator, a machine evaluator that determines whether the content within the media content item falls within one of multiple categories, etc.).

Referring back to FIG. 1, at 114, process 100 can receive the first directional input for a second time. That is, in some embodiments, process 100 can receive the first directional input after the menu icon has been highlighted, as described above in connection with block 112 and as shown in and described above in connection with FIG. 3B.

In some embodiments, process 100 can receive the first directional input in any suitable manner. For example, in some embodiments, process 100 can receive the first directional input via any suitable input device associated with the user device, such as a remote control.

At 116, process 100 can highlight a user interface option corresponding to the received first directional input. For example, referring to FIG. 3B, in an instance where the received first directional input is an "up" command, process 100 can navigate in an up direction within user interface 330 such that options 202, located above currently highlighted tile 206, is highlighted. That is, in some embodiments, receiving the first directional input a second time can cause the user interface to navigate away from menu icon 332 to a different selectable input (e.g., options 202, and/or any other suitable selectable portion of the user interface) in a location relative to tile 206 that corresponds to the first directional input.

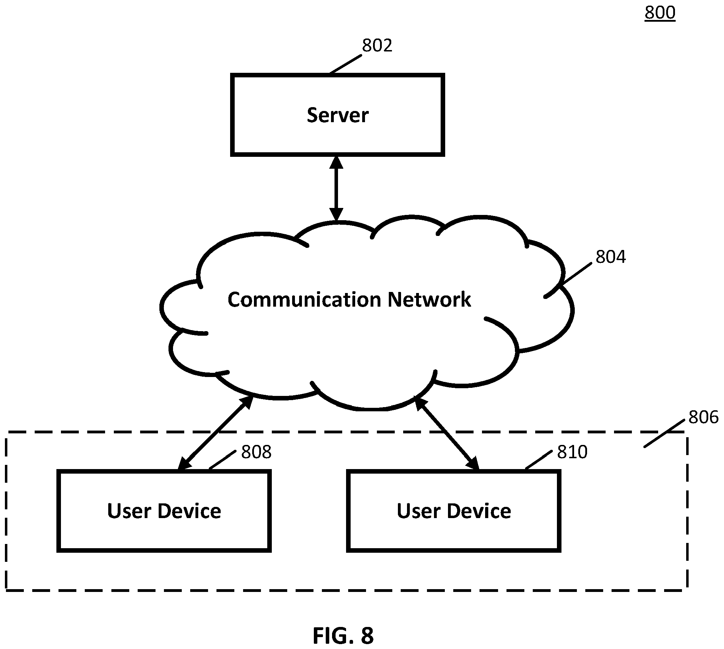

Turning to FIG. 8, an example 800 of hardware for navigating user interfaces that can be used in accordance with some embodiments of the disclosed subject matter is shown. As illustrated, hardware 800 can include a server 802, a communication network 804, and one or more user devices 806, such as user device 808 and/or 810.

Server 802 can be any suitable server(s) for storing media content, information, data, programs and/or any other suitable content. For example, in some embodiments, server 802 can be associated with a media content streaming or sharing service and can host any suitable media content items (e.g., videos, television programs, movies, audio content, and/or any other suitable type of media content items) that can be viewed on user devices. In some embodiments, server 802 can cause a user interface for browsing available media content items to be presented on user device 806.

Communication network 804 can be any suitable combination of one or more wired and/or wireless networks in some embodiments. For example, communication network 804 can include any one or more of the Internet, an intranet, a wide-area network (WAN), a local-area network (LAN), a wireless network, a digital subscriber line (DSL) network, a frame relay network, an asynchronous transfer mode (ATM) network, a virtual private network (VPN), and/or any other suitable communication network. User devices 806 can be connected by one or more communications links to communication network 804 that can be linked via one or more communications links to server 802. The communications links can be any communications links suitable for communicating data among user devices 806 and server 802 such as network links, dial-up links, wireless links, hard-wired links, any other suitable communications links, or any suitable combination of such links.

In some embodiments, user devices 806 can be any suitable type of user device for presenting user interfaces, navigating through a user interface, presenting a media content item, and/or performing any other suitable functions. For example, in some embodiments, user devices 806 can include a television, a projector, a gaming system, a laptop computer, a tablet computer, a mobile phone, a desktop computer, a wearable computer, and/or any other suitable user device.

In a more particular example, a first user device can be a media presentation device, such as a digital media receiver or media streaming device that is connected to a display device, where the media presentation device connected to the display device have video playback capabilities and audio playback capabilities, and a second user device can be a device that transmits media playback instructions to the first user device. In this example, the first user device and the second user device can be connected over a communication network, such as a wireless local area network.

In some embodiments, a first user device can be a media presentation device, such as a digital media receiver or media streaming device that is connected to a display device. Media presentation device can be any suitable device, such as a smartphone, a tablet computer, a wearable computer, a laptop computer, a personal computer, an electronic reader, a digital media receiver, a smart television, a game console, any other suitable computing device, or any suitable combination thereof. For example, the media presentation device can request media content items from a content server and can direct playback of a media content item to begin on a connected display device (e.g., a television device that a digital media receiver device is connected).

Although server 802 is illustrated as one device, the functions performed by server 802 can be performed using any suitable number of devices in some embodiments. For example, in some embodiments, multiple devices can be used to implement the functions performed by server 802.

Although two user devices 808 and 810 are shown in FIG. 8 to avoid over-complicating the figure, any suitable number of devices, and/or any suitable types of user devices, can be used in some embodiments.

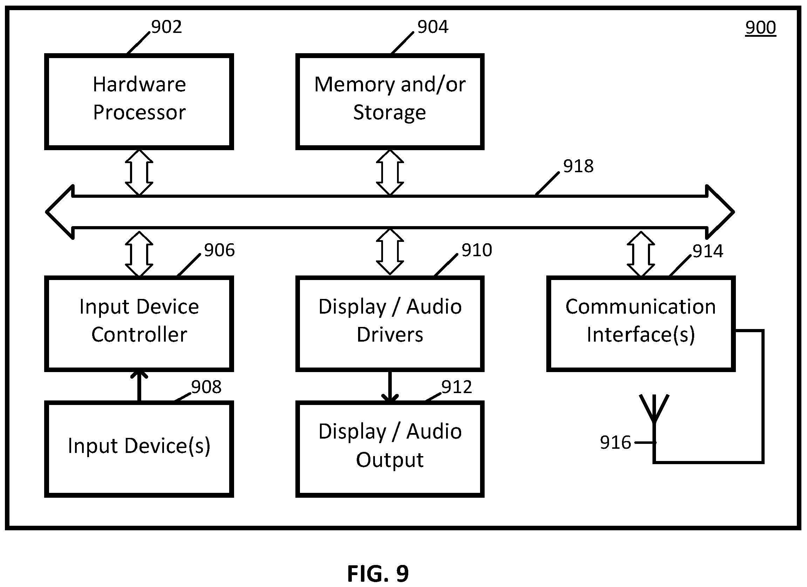

Server 802 and user devices 806 can be implemented using any suitable hardware in some embodiments. For example, in some embodiments, devices 802 and 806 can be implemented using any suitable general purpose computer or special purpose computer. For example, a mobile phone may be implemented using a special purpose computer. Any such general purpose computer or special purpose computer can include any suitable hardware. For example, as illustrated in example hardware 900 of FIG. 9, such hardware can include hardware processor 902, memory and/or storage 904, an input device controller 906, an input device 908, display/audio drivers 910, display and audio output circuitry 912, communication interface(s) 914, an antenna 916, and a bus 918.

Hardware processor 902 can include any suitable hardware processor, such as a microprocessor, a micro-controller, digital signal processor(s), dedicated logic, and/or any other suitable circuitry for controlling the functioning of a general purpose computer or a special purpose computer in some embodiments. In some embodiments, hardware processor 902 can be controlled by a server program stored in memory and/or storage 904 of a server, such as server 802. For example, in some embodiments, the server program can cause hardware processor 902 to cause a user interface for browsing media content items to be presented on user devices 806, and/or perform any other suitable functions. In some embodiments, hardware processor 902 can be controlled by a computer program stored in memory and/or storage 904 of user devices 806. For example, the computer program can cause hardware processor 902 to present a user interface, receive a user input to navigate the user interface, update the user interface based on the received user input, and/or perform any other suitable functions.

Memory and/or storage 904 can be any suitable memory and/or storage for storing programs, data, and/or any other suitable information in some embodiments. For example, memory and/or storage 904 can include random access memory, read-only memory, flash memory, hard disk storage, optical media, and/or any other suitable memory.

Input device controller 906 can be any suitable circuitry for controlling and receiving input from one or more input devices 908 in some embodiments. For example, input device controller 906 can be circuitry for receiving input from a remote control, from a touchscreen, from a keyboard, from one or more buttons, from a voice recognition circuit, from a microphone, from a camera, from an optical sensor, from an accelerometer, from a temperature sensor, from a near field sensor, from a pressure sensor, from an encoder, and/or any other type of input device.

Display/audio drivers 910 can be any suitable circuitry for controlling and driving output to one or more display/audio output devices 912 in some embodiments. For example, display/audio drivers 910 can be circuitry for driving a touchscreen, a flat-panel display, a cathode ray tube display, a projector, a speaker or speakers, and/or any other suitable display and/or presentation devices.

Communication interface(s) 914 can be any suitable circuitry for interfacing with one or more communication networks (e.g., computer network 804). For example, interface(s) 914 can include network interface card circuitry, wireless communication circuitry, and/or any other suitable type of communication network circuitry.

Antenna 916 can be any suitable one or more antennas for wirelessly communicating with a communication network (e.g., communication network 804) in some embodiments. In some embodiments, antenna 916 can be omitted.

Bus 918 can be any suitable mechanism for communicating between two or more components 902, 904, 906, 910, and 914 in some embodiments.

Any other suitable components can be included in hardware 900 in accordance with some embodiments.

In some embodiments, at least some of the above described blocks of the process of FIG. 1 can be executed or performed in any order or sequence not limited to the order and sequence shown in and described in connection with the figure. Also, some of the above blocks of FIG. 1 can be executed or performed substantially simultaneously where appropriate or in parallel to reduce latency and processing times. Additionally or alternatively, some of the above described blocks of the process of FIG. 1 can be omitted.

In some embodiments, any suitable computer readable media can be used for storing instructions for performing the functions and/or processes herein. For example, in some embodiments, computer readable media can be transitory or non-transitory. For example, non-transitory computer readable media can include media such as non-transitory forms of magnetic media (such as hard disks, floppy disks, and/or any other suitable magnetic media), non-transitory forms of optical media (such as compact discs, digital video discs, Blu-ray discs, and/or any other suitable optical media), non-transitory forms of semiconductor media (such as flash memory, electrically programmable read-only memory (EPROM), electrically erasable programmable read-only memory (EEPROM), and/or any other suitable semiconductor media), any suitable media that is not fleeting or devoid of any semblance of permanence during transmission, and/or any suitable tangible media. As another example, transitory computer readable media can include signals on networks, in wires, conductors, optical fibers, circuits, any suitable media that is fleeting and devoid of any semblance of permanence during transmission, and/or any suitable intangible media.

Accordingly, methods, systems, and media for navigating user interfaces are provided.

Although the invention has been described and illustrated in the foregoing illustrative embodiments, it is understood that the present disclosure has been made only by way of example, and that numerous changes in the details of implementation of the invention can be made without departing from the scope of the invention, which is limited only by the claims that follow. Features of the disclosed embodiments can be combined and rearranged in various ways.

## Claims

1. A method for navigating user interfaces, the method comprising:
causing (102), on a user interface presented on a display device, a plurality of tile interfaces to be presented, wherein a first tile interface of the plurality of tile interfaces is presented in a visual manner that indicates that the first tile interface is currently highlighted, and wherein each tile interface of the plurality of tile interfaces corresponds to a media content item that is available for presentation on the display device;
determining that a predetermined duration of time has elapsed since the first tile interface was presented in the visual manner that indicates that the first tile interface is currently highlighted;
in response to determining that the predetermined duration of time has elapsed since the first tile interface was presented in the visual manner that indicates that the first tile interface is currently highlighted, causing (104) a menu icon that corresponds to a menu interface for accessing options related to a media content item corresponding to the highlighted first tile interface to be presented in connection with the highlighted first tile interface;
causing a directional input indicator to be presented in connection with the menu icon and which indicates a given directional input that, when entered, will cause the corresponding menu icon to become selectable;
receiving (106), via an input device associated with the display device, a first directional input from a group of possible directional inputs;
determining (108) whether the first directional input is said given directional input that causes the menu icon to become selectable;
in response to determining that the first directional input is the given directional input, activating (112) the menu icon that causes the menu icon to become selectable;
determining (114) whether a subsequent directional input was received within a predetermined period of time of causing the menu item to become selectable;
in response to activating the menu icon and determining that the subsequent directional input was not received within the predetermined period of time, causing the menu item to be selected;
in response to causing the menu icon to be selected, causing (116) the menu interface for accessing the options related to the media content item corresponding to the highlighted first tile interface to be presented;
receiving, via the input device, the first directional input for a second time; and
in response to receiving the first directional input for the second time, causing a second tile interface of the plurality of tile interfaces to be presented, wherein the second tile interface is located in a position relative to the first tile interface that corresponds to the first directional input.

2. The method of claim 1, further comprising:
receiving, via the input device, a second directional input, wherein the given directional input corresponds to a selection of an up command on the input device; and
in response to determining that the second directional input is not the given directional input that causes the menu icon to become selectable, causing a third tile interface of the plurality of tile interfaces to be highlighted, wherein the third tile interface is located in a position relative to the first tile interface that corresponds to the second directional input.

3. The method of any of the preceding claims, wherein the options related to the media content item include an option to indicate that the media content item is not of interest to a user of the display device.

4. The method of claim 3, further comprising in response to determining that the option to indicate that the media content item is not of interest to the user of the display device, updating the plurality of tile interfaces presented on the user interface based on the indication that the media content item is not of interest to the user of the display device.

5. The method of any of the preceding claims, wherein the options related to the media content item include an option to add the media content item to a group of media content items associated with a user account of a user of the display device.

6. The method of claim 5, further comprising, in response to receiving a selection of the option to add the media content item to the group of media content items, causing a playlist interface to be presented, wherein the playlist interface prompts a selection of a first group of media content items from a plurality of groups of media content items to add the media content item.

7. The method of any of the preceding claims, wherein the options related to the media content item include an option to add the media content item to a queue of media content items for playback at a later time.

8. The method of any of the preceding claims, wherein the options related to the media content item include an option to indicate that the media content item contains inappropriate content.

9. A system for navigating user interfaces, the system comprising:
a hardware processor (902) that is configured to:
cause, on a user interface (912) presented on a display device, a plurality of tile interfaces to be presented, wherein a first tile interface of the plurality of tile interfaces is presented in a visual manner that indicates that the first tile interface is currently highlighted, and wherein each tile interface of the plurality of tile interfaces corresponds to a media content item that is available for presentation on the display device;
determine that a predetermined duration of time has elapsed since the first tile interface was presented in the visual manner that indicates that the first tile interface is currently highlighted;
in response to determining that the predetermined duration of time has elapsed since the first tile interface was presented in the visual manner that indicates that the first tile interface is currently highlighted, cause a menu icon that corresponds to a menu interface for accessing options related to a media content item corresponding to the highlighted first tile interface to be presented in connection with the highlighted first tile interface;
cause a directional input indicator to be presented in connection with the menu icon and which indicates a given directional input that, when entered, will cause the corresponding menu icon to become selectable;
receive, via an input device (908) associated with the display device, a first directional input from a group of possible directional inputs;
determine whether the first directional input is said given directional input that causes the menu icon to become selectable;
in response to determining that the first directional input is the given directional input, activate the menu icon that causes the menu icon to become selectable;
determine whether a subsequent directional input was received within a predetermined period of time of causing the menu item to become selectable;
in response to activating the menu icon and determining that the subsequent directional input was not received within the predetermined period of time, cause the menu item to be selected;
in response to causing the menu icon to be selected, cause the menu interface for accessing the options related to the media content item corresponding to the highlighted first tile interface to be presented;
receive, via the input device (908), the first directional input for a second time; and
in response to receiving the first directional input for the second time, cause a second tile interface of the plurality of tile interfaces to be presented, wherein the second tile interface is located in a position relative to the first tile interface that corresponds to the first directional input.

10. The system of claim 9, wherein the hardware processor is further configured to:
receive, via the input device (908), a second directional input, wherein the given directional input corresponds to a selection of an up command on the input device; and
in response to determining that the second directional input is not the given directional input from the group of possible directional inputs that causes the menu icon to become selectable, cause a third tile interface of the plurality of tile interfaces to be highlighted, wherein the third tile interface is located in a position relative to the first tile interface that corresponds to the second directional input.

11. The system of any of claims 9 or 10, wherein the options related to the media content item include an option to indicate that the media content item is not of interest to a user of the display device.

12. The system of claim 11, wherein the hardware processor is further configured to update the plurality of tile interfaces presented on the user interface based on the indication that the media content item is not of interest to the user of the display device in response to determining that the option to indicate that the media content item is not of interest to the user of the display device.

13. The system of any of claims 9 to 12, wherein the options related to the media content item include an option to add the media content item to a group of media content items associated with a user account of a user of the display device.

14. A computer-readable medium containing computer executable instructions that, when executed by a processor, cause the processor to perform the method of any of claims 1 to 8.

15. A computer program comprising instructions that, when executed by a computer, causes the computer to perform the method of any of claims 1 to 8.

## Patentansprüche

1. Verfahren zum Navigieren von Benutzeroberflächen, wobei das Verfahren umfasst:
Bewirken (102), dass auf einer Benutzeroberfläche, die auf einer Anzeigevorrichtung dargestellt wird, eine Vielzahl von Kachelschnittstellen dargestellt wird, wobei eine erste Kachelschnittstelle der Vielzahl von Kachelschnittstellen auf eine visuelle Weise dargestellt wird, die angibt, dass die erste Kachelschnittstelle aktuell hervorgehoben ist, und wobei jede Kachelschnittstelle der Vielzahl von Kachelschnittstellen einem Medieninhaltselement entspricht, das zur Darstellung auf der Anzeigevorrichtung verfügbar ist;
Bestimmen, dass eine vorbestimmte Zeitspanne verstrichen ist, seit die erste Kachelschnittstelle auf die visuelle Weise dargestellt wurde, die angibt, dass die erste Kachelschnittstelle aktuell hervorgehoben ist;
als Reaktion auf das Bestimmen, dass die vorgegebene Zeitspanne verstrichen ist, seit die erste Kachelschnittstelle auf die visuelle Weise dargestellt wurde, die angibt, dass die erste Kachelschnittstelle aktuell hervorgehoben ist, Bewirken (104), dass ein Menüsymbol, das einer Menüschnittstelle zum Zugreifen auf Optionen in Bezug auf ein Medieninhaltselement entspricht, das der hervorgehobenen ersten Kachelschnittstelle entspricht, in Verbindung mit der hervorgehobenen ersten Kachelschnittstelle dargestellt wird;
Bewirken, dass ein Richtungseingabeindikator in Verbindung mit dem Menüsymbol dargestellt wird, der eine gegebene Richtungseingabe angibt, die bei Eingabe bewirken wird, dass das entsprechende Menüsymbol auswählbar wird;
Empfangen (106) einer ersten Richtungseingabe aus einer Gruppe möglicher Richtungseingaben über eine mit der Anzeigevorrichtung assoziierte Eingabevorrichtung;
Bestimmen (108), ob die erste Richtungseingabe die gegebene Richtungseingabe ist, die bewirkt, dass das Menüsymbol auswählbar wird;
als Reaktion auf das Bestimmen, dass die erste Richtungseingabe die gegebene Richtungseingabe ist, Aktivieren (112) des Menüsymbols, was bewirkt, dass das Menüsymbol auswählbar wird;
Bestimmen (114), ob eine anschließende Richtungseingabe innerhalb eines vorbestimmten Zeitraums empfangen wurde, nachdem bewirkt wurde, dass das Menüelement auswählbar wird;
als Reaktion auf das Aktivieren des Menüsymbols und das Bestimmen, dass die anschließende Richtungseingabe nicht innerhalb des vorbestimmten Zeitraums empfangen wurde, Bewirken, dass das Menüelement ausgewählt wird;
als Reaktion auf das Bewirken, dass das Menüelement ausgewählt wird, Bewirken (116), dass die Menüschnittstelle zum Zugreifen auf die Optionen in Bezug auf das Medieninhaltselement, das der hervorgehobenen ersten Kachelschnittstelle entspricht, dargestellt wird;
Empfangen der ersten Richtungseingabe über die Eingabevorrichtung zum zweiten Mal; und
als Reaktion auf das Empfangen der ersten Richtungseingabe zum zweiten Mal Bewirken, dass eine zweite Kachelschnittstelle der Vielzahl von Kachelschnittstellen dargestellt wird, wobei sich die zweite Kachelschnittstelle in einer Position relativ zu der ersten Kachelschnittstelle befindet, die der ersten Richtungseingabe entspricht.

2. Verfahren nach Anspruch 1, ferner umfassend:
Empfangen einer zweiten Richtungseingabe über die Eingabevorrichtung, wobei die gegebene Richtungseingabe einer Auswahl eines Aufwärtsbefehls auf der Eingabevorrichtung entspricht; und
als Reaktion auf das Bestimmen, dass die zweite Richtungseingabe nicht die gegebene Richtungseingabe ist, die bewirkt, dass das Menüsymbol auswählbar wird, Bewirken, dass eine dritte Kachelschnittstelle der Vielzahl von Kachelschnittstellen hervorgehoben wird, wobei sich die dritte Kachelschnittstelle in einer Position relativ zu der ersten Kachelschnittstelle befindet, die der zweiten Richtungseingabe entspricht.

3. Verfahren nach einem der vorhergehenden Ansprüche, wobei die Optionen in Bezug auf das Medieninhaltselement eine Option beinhalten, um anzugeben, dass das Medieninhaltselement für einen Benutzer der Anzeigevorrichtung nicht von Interesse ist.

4. Verfahren nach Anspruch 3, ferner umfassend als Reaktion auf das Bestimmen, dass die Option, um anzugeben, dass das Medieninhaltselement für den Benutzer der Anzeigevorrichtung nicht von Interesse ist, Aktualisieren der Vielzahl von auf der Benutzeroberfläche dargestellten Kacheloberflächen basierend auf der Angabe, dass das Medieninhaltselement für den Benutzer der Anzeigevorrichtung nicht von Interesse ist.

5. Verfahren nach einem der vorhergehenden Ansprüche, wobei die Optionen in Bezug auf das Medieninhaltselement eine Option beinhalten, um das Medieninhaltselement zu einer Gruppe von Medieninhaltselementen hinzuzufügen, die mit einem Benutzerkonto eines Benutzers der Anzeigevorrichtung assoziiert sind.

6. Verfahren nach Anspruch 5, ferner umfassend als Reaktion auf das Empfangen einer Auswahl der Option, um das Medieninhaltselement zu der Gruppe von Medieninhaltselementen hinzuzufügen, Bewirken, dass eine Wiedergabelistenschnittstelle dargestellt wird, wobei die Wiedergabelistenschnittstelle zu einer Auswahl einer ersten Gruppe von Medieninhaltselementen aus einer Vielzahl von Gruppen von Medieninhaltselementen, um das Medieninhaltselement hinzuzufügen, auffordert.

7. Verfahren nach einem der vorhergehenden Ansprüche, wobei die Optionen in Bezug auf das Medieninhaltselement eine Option beinhalten, um das Medieninhaltselement zu einer Warteschlange von Medieninhaltselementen zur späteren Wiedergabe hinzuzufügen.

8. Verfahren nach einem der vorhergehenden Ansprüche, wobei die Optionen in Bezug auf das Medieninhaltselement eine Option beinhalten, um anzugeben, dass das Medieninhaltselement unangemessenen Inhalt enthält.

9. System zum Navigieren von Benutzeroberflächen, wobei das System umfasst:
einen Hardwareprozessor (902), der konfiguriert ist zum:
Bewirken, dass auf einer Benutzeroberfläche (912), die auf einer Anzeigevorrichtung dargestellt wird, eine Vielzahl von Kachelschnittstellen dargestellt wird, wobei eine erste Kachelschnittstelle der Vielzahl von Kachelschnittstellen auf eine visuelle Weise dargestellt wird, die angibt, dass die erste Kachelschnittstelle aktuell hervorgehoben ist, und wobei jede Kachelschnittstelle der Vielzahl von Kachelschnittstellen einem Medieninhaltselement entspricht, das zur Darstellung auf der Anzeigevorrichtung verfügbar ist;
Bestimmen, dass eine vorbestimmte Zeitspanne verstrichen ist, seit die erste Kachelschnittstelle auf die visuelle Weise dargestellt wurde, die angibt, dass die erste Kachelschnittstelle aktuell hervorgehoben ist;
als Reaktion auf das Bestimmen, dass die vorgegebene Zeitspanne verstrichen ist, seit die erste Kachelschnittstelle auf die visuelle Weise dargestellt wurde, die angibt, dass die erste Kachelschnittstelle aktuell hervorgehoben ist, Bewirken, dass ein Menüsymbol, das einer Menüschnittstelle zum Zugreifen auf Optionen in Bezug auf ein Medieninhaltselement entspricht, das der hervorgehobenen ersten Kachelschnittstelle entspricht, in Verbindung mit der hervorgehobenen ersten Kachelschnittstelle dargestellt wird;
Bewirken, dass ein Richtungseingabeindikator in Verbindung mit dem Menüsymbol dargestellt wird, der eine gegebene Richtungseingabe angibt, die bei Eingabe bewirken wird, dass das entsprechende Menüsymbol auswählbar wird;
Empfangen einer ersten Richtungseingabe aus einer Gruppe möglicher Richtungseingaben über eine mit der Anzeigevorrichtung assoziierte Eingabevorrichtung (908);
Bestimmen, ob die erste Richtungseingabe die gegebene Richtungseingabe ist, die bewirkt, dass das Menüsymbol auswählbar wird;
als Reaktion auf das Bestimmen, dass die erste Richtungseingabe die gegebene Richtungseingabe ist, Aktivieren des Menüsymbols, was bewirkt, dass das Menüsymbol auswählbar wird;
Bestimmen, ob eine anschließende Richtungseingabe innerhalb eines vorbestimmten Zeitraums empfangen wurde, nachdem bewirkt wurde, dass das Menüelement auswählbar wird;
als Reaktion auf das Aktivieren des Menüsymbols und das Bestimmen, dass die anschließende Richtungseingabe nicht innerhalb des vorbestimmten Zeitraums empfangen wurde, Bewirken, dass das Menüelement ausgewählt wird;
als Reaktion auf das Bewirken, dass das Menüelement ausgewählt wird, Bewirken, dass die Menüschnittstelle zum Zugreifen auf die Optionen in Bezug auf das Medieninhaltselement, das der hervorgehobenen ersten Kachelschnittstelle entspricht, dargestellt wird;
Empfangen der ersten Richtungseingabe über die Eingabevorrichtung (908) zum zweiten Mal; und
als Reaktion auf das Empfangen der ersten Richtungseingabe zum zweiten Mal Bewirken, dass eine zweite Kachelschnittstelle der Vielzahl von Kachelschnittstellen dargestellt wird, wobei sich die zweite Kachelschnittstelle in einer Position relativ zu der ersten Kachelschnittstelle befindet, die der ersten Richtungseingabe entspricht.

10. System nach Anspruch 9, wobei der Hardwareprozessor ferner konfiguriert ist zum:
Empfangen einer zweiten Richtungseingabe über die Eingabevorrichtung (908), wobei die gegebene Richtungseingabe einer Auswahl eines Aufwärtsbefehls auf der Eingabevorrichtung entspricht; und
als Reaktion auf das Bestimmen, dass die zweite Richtungseingabe nicht die gegebene Richtungseingabe aus der Gruppe möglicher Richtungseingaben ist, die bewirkt, dass das Menüsymbol auswählbar wird, Bewirken, dass eine dritte Kachelschnittstelle der Vielzahl von Kachelschnittstellen hervorgehoben wird, wobei sich die dritte Kachelschnittstelle in einer Position relativ zu der ersten Kachelschnittstelle befindet, die der zweiten Richtungseingabe entspricht.

11. System nach einem der Ansprüche 9 oder 10, wobei die Optionen in Bezug auf das Medieninhaltselement eine Option beinhalten, um anzugeben, dass das Medieninhaltselement für einen Benutzer der Anzeigevorrichtung nicht von Interesse ist.

12. System nach Anspruch 11, wobei der Hardwareprozessor ferner dazu konfiguriert ist, die auf der Benutzeroberfläche dargestellte Vielzahl der Kachelschnittstellen basierend auf der Angabe, dass das Medieninhaltselement für den Benutzer der Anzeigevorrichtung nicht von Interesse ist, als Reaktion auf das Bestimmen, dass die Option, um anzugeben, dass das Medieninhaltselement für den Benutzer der Anzeigevorrichtung nicht von Interesse ist, zu aktualisieren.

13. System nach einem der Ansprüche 9 bis 12, wobei die Optionen in Bezug auf das Medieninhaltselement eine Option beinhalten, um das Medieninhaltselement zu einer Gruppe von Medieninhaltselementen hinzuzufügen, die mit einem Benutzerkonto eines Benutzers der Anzeigevorrichtung assoziiert sind.

14. Computerlesbares Medium, das computerausführbare Anweisungen enthält, die bei Ausführung durch einen Prozessor bewirken, dass der Prozessor das Verfahren nach einem der Ansprüche 1 bis 8 durchführt.

15. Computerprogrammprodukt, das Anweisungen umfasst, die bei Ausführung durch einen Computer bewirken, dass der Computer das Verfahren nach einem der Ansprüche 1 bis 8 durchführt.

## Revendications

1. Procédé de navigation d'interfaces utilisateur, le procédé comprenant :
le fait d'amener (102), sur une interface utilisateur présentée sur un dispositif d'affichage, une pluralité d'interfaces de tuile à être présentée, dans lequel une première interface de tuile de la pluralité d'interfaces de tuile est présentée d'une manière visuelle qui indique que la première interface de tuile est actuellement mise en surbrillance, et dans lequel chaque interface de tuile de la pluralité d'interfaces de tuile correspond à un élément de contenu multimédia qui est disponible pour une présentation sur le dispositif d'affichage ;
la détermination du fait qu'une durée prédéterminée s'est écoulée depuis que la première interface de tuile a été présentée de la manière visuelle qui indique que la première interface de tuile est actuellement mise en surbrillance ;
en réponse à la détermination du fait que la durée prédéterminée s'est écoulée depuis que la première interface de tuile a été présentée de la manière visuelle qui indique que la première interface de tuile est actuellement mise en surbrillance, le fait d'amener (104) une icône de menu qui correspond à une interface de menu pour accéder aux options liées à un élément de contenu multimédia correspondant à la première interface de tuile mise en surbrillance à être présentée en relation avec la première interface de tuile mise en surbrillance ;
le fait d'amener un indicateur d'entrée directionnelle à être présenté en relation avec l'icône de menu et qui indique une entrée directionnelle donnée qui, une fois saisie, amènera l'icône de menu correspondante à devenir sélectionnable ;
la réception (106), par l'intermédiaire d'un dispositif d'entrée associé au dispositif d'affichage, d'une première entrée directionnelle parmi un groupe d'entrées directionnelles possibles ;
le fait de déterminer (108) si la première entrée directionnelle est ladite entrée directionnelle donnée qui amène l'icône de menu à devenir sélectionnable ;
en réponse à la détermination du fait que la première entrée directionnelle est l'entrée directionnelle donnée, l'activation (112) de l'icône de menu qui amène l'icône de menu à devenir sélectionnable ;
le fait de déterminer (114) si une entrée directionnelle ultérieure a été reçue dans une période prédéterminée pendant laquelle l'élément de menu est amené à devenir sélectionnable ;
en réponse à l'activation de l'icône de menu et à la détermination du fait que l'entrée directionnelle ultérieure n'a pas été reçue dans la période prédéterminée, le fait d'amener l'élément de menu à être sélectionné ;
en réponse au fait d'amener l'élément de menu à être sélectionné, le fait d'amener (116) l'interface de menu pour accéder aux options liées à l'élément de contenu multimédia correspondant à la première interface de tuile en surbrillance à être présentée ;
la réception, par l'intermédiaire du dispositif d'entrée, de la première entrée directionnelle pour une seconde fois ; et
en réponse à la réception de la première entrée directionnelle pour la seconde fois, le fait d'amener une deuxième interface de tuile de la pluralité d'interfaces de tuile à être présentée, dans lequel la deuxième interface de tuile est située dans une position par rapport à la première interface de tuile qui correspond à la première entrée directionnelle.

2. Procédé selon la revendication 1, comprenant également :
la réception, par l'intermédiaire du dispositif d'entrée, d'une seconde entrée directionnelle, dans lequel l'entrée directionnelle donnée correspond à une sélection d'une commande vers le haut sur le dispositif d'entrée ; et
en réponse à la détermination du fait que la seconde entrée directionnelle n'est pas l'entrée directionnelle donnée qui amène l'icône de menu à devenir sélectionnable, le fait d'amener une troisième interface de tuile de la pluralité d'interfaces de tuile à être mise en surbrillance, dans lequel la troisième interface de tuile est située dans une position par rapport à la première interface de tuile qui correspond à la seconde entrée directionnelle.

3. Procédé selon l'une quelconque des revendications précédentes, dans lequel les options liées à l'élément de contenu multimédia comportent une option pour indiquer que l'élément de contenu multimédia n'est pas intéressant pour un utilisateur du dispositif d'affichage.

4. Procédé selon la revendication 3, comprenant également, en réponse à la détermination du fait que l'option pour indiquer que l'élément de contenu multimédia n'est pas intéressant pour l'utilisateur du dispositif d'affichage, la mise à jour de la pluralité d'interfaces de tuile présentées sur l'interface utilisateur sur la base de l'indication selon laquelle l'élément de contenu multimédia n'est pas intéressant pour l'utilisateur du dispositif d'affichage.

5. Procédé selon l'une quelconque des revendications précédentes, dans lequel les options liées à l'élément de contenu multimédia comportent une option pour ajouter l'élément de contenu multimédia à un groupe d'éléments de contenu multimédia associés à un compte d'utilisateur d'un utilisateur du dispositif d'affichage.

6. Procédé selon la revendication 5, comprenant également, en réponse à la réception d'une sélection de l'option permettant d'ajouter l'élément de contenu multimédia au groupe d'éléments de contenu multimédia, le fait d'amener une interface de liste de lecture à être présentée, dans lequel l'interface de liste de lecture amène une sélection d'un premier groupe d'éléments de contenu multimédia parmi une pluralité de groupes d'éléments de contenu multimédia à ajouter l'élément de contenu multimédia.

7. Procédé selon l'une quelconque des revendications précédentes, dans lequel les options liées à l'élément de contenu multimédia comportent une option permettant d'ajouter l'élément de contenu multimédia à une file d'attente d'éléments de contenu multimédia pour une lecture ultérieure.

8. Procédé selon l'une quelconque des revendications précédentes, dans lequel les options liées à l'élément de contenu multimédia comportent une option pour indiquer que l'élément de contenu multimédia contient un contenu inapproprié.

9. Système de navigation d'interfaces utilisateur, le système comprenant :
un processeur matériel (902) qui est configuré pour :
amener, sur une interface utilisateur (912) présentée sur un dispositif d'affichage, une pluralité d'interfaces de tuile à être présentée, dans lequel une première interface de tuile de la pluralité d'interfaces de tuile est présentée d'une manière visuelle qui indique que la première interface de tuile est actuellement mise en surbrillance, et dans lequel chaque interface de tuile de la pluralité d'interfaces de tuile correspond à un élément de contenu multimédia qui est disponible pour une présentation sur le dispositif d'affichage ;
déterminer qu'une durée prédéterminée s'est écoulée depuis que la première interface de tuile a été présentée de la manière visuelle qui indique que la première interface de tuile est actuellement mise en surbrillance ;
en réponse à la détermination du fait que la durée prédéterminée s'est écoulée depuis que la première interface de tuile a été présentée de la manière visuelle qui indique que la première interface de tuile est actuellement mise en surbrillance, amener une icône de menu qui correspond à une interface de menu pour accéder aux options liées à un élément de contenu multimédia correspondant à la première interface de tuile mise en surbrillance à être présentée en relation avec la première interface de tuile mise en surbrillance ;
amener un indicateur d'entrée directionnelle à être présenté en relation avec l'icône de menu et qui indique une entrée directionnelle donnée qui, une fois saisie, amènera l'icône de menu correspondante à devenir sélectionnable ;
recevoir, par l'intermédiaire d'un dispositif d'entrée (908) associé au dispositif d'affichage, une première entrée directionnelle parmi un groupe d'entrées directionnelles possibles ;
déterminer si la première entrée directionnelle est ladite entrée directionnelle donnée qui amène l'icône de menu à devenir sélectionnable ;
en réponse à la détermination du fait que la première entrée directionnelle est l'entrée directionnelle donnée, activer l'icône de menu qui amène l'icône de menu à devenir sélectionnable ;
déterminer si une entrée directionnelle ultérieure a été reçue dans une période prédéterminée pendant laquelle l'élément de menu est amené à devenir sélectionnable ;
en réponse à l'activation de l'icône de menu et à la détermination du fait que l'entrée directionnelle ultérieure n'a pas été reçue dans la période prédéterminée, amener l'élément de menu à être sélectionné ;
en réponse au fait d'amener l'élément de menu à être sélectionné, amener l'interface de menu pour accéder aux options liées à l'élément de contenu multimédia correspondant à la première interface de tuile mise en surbrillance à être présentée ;
recevoir, par l'intermédiaire du dispositif d'entrée (908), la première entrée directionnelle pour une seconde fois ; et
en réponse à la réception de la première entrée directionnelle pour la seconde fois, amener une deuxième interface de tuile de la pluralité d'interfaces de tuile à être présentée, dans lequel la deuxième interface de tuile est située dans une position par rapport à la première interface de tuile qui correspond à la première entrée directionnelle.

10. Système selon la revendication 9, dans lequel le processeur matériel est également configuré pour :
recevoir, par l'intermédiaire du dispositif d'entrée (908), une seconde entrée directionnelle, dans lequel l'entrée directionnelle donnée correspond à une sélection d'une commande vers le haut sur le dispositif d'entrée ; et
en réponse à la détermination du fait que la seconde entrée directionnelle n'est pas l'entrée directionnelle donnée du groupe d'entrées directionnelles possibles qui amène l'icône de menu à devenir sélectionnable, le fait d'amener une troisième interface de tuile de la pluralité d'interfaces de tuile à être mise en surbrillance, dans lequel la troisième interface de tuile est située dans une position par rapport à la première interface de tuile qui correspond à la seconde entrée directionnelle.

11. Système selon l'une quelconque des revendications 9 ou 10, dans lequel les options liées à l'élément de contenu multimédia comportent une option pour indiquer que l'élément de contenu multimédia n'est pas intéressant pour un utilisateur du dispositif d'affichage.

12. Système selon la revendication 11, dans lequel le processeur matériel est également configuré pour mettre à jour la pluralité d'interfaces de tuile présentées sur l'interface utilisateur sur la base de l'indication selon laquelle l'élément de contenu multimédia n'est pas intéressant pour l'utilisateur du dispositif d'affichage en réponse à la détermination du fait que l'option permettant d'indiquer que l'élément de contenu multimédia n'est pas intéressant pour l'utilisateur du dispositif d'affichage.

13. Système selon l'une quelconque des revendications 9 à 12, dans lequel les options liées à l'élément de contenu multimédia comportent une option pour ajouter l'élément de contenu multimédia à un groupe d'éléments de contenu multimédia associés à un compte d'utilisateur d'un utilisateur du dispositif d'affichage.

14. Support lisible par ordinateur contenant des instructions exécutables par ordinateur qui, lorsqu'elles sont exécutées par un processeur, amènent le processeur à exécuter le procédé selon l'une quelconque des revendications 1 à 8.

15. Programme informatique comprenant des instructions qui, lorsqu'elles sont exécutées par un ordinateur, amènent l'ordinateur à exécuter le procédé selon l'une quelconque des revendications 1 à 8.
